# EUROPEAN PATENT APPLICATION

(11) **EP 2 747 363 A1**
(43) Date of publication of application: **25.06.2014**
(21) Application number: 12199369.5
(22) Date of filing: 24.12.2012
(51) Int. Cl.: H04L 29/06

(54) **Transaction validation method using a communications device**

(71) Applicant: Orange, 75015 Paris (FR)
(72) Inventor: Chen, Liang, London W13 9NF (GB); Sandeep Das, Reshma, London RG1 2GW (GB)
(74) Representative: Orian, Yvette Suzanne

(57) **Abstract**

In a method of validating a transaction, when a purchaser sets up the transaction using first terminal equipment (ST) the purchaser selects a payment method associated with his communications device, notably a mobile payment application. The transaction details are transmitted to payment server apparatus of the mobile payment application (notably a telecommunications operator (TC)), and the server apparatus generates a machine-readable code representing an encoded transaction validation token. The machine-readable code is transmitted to the first terminal equipment (ST) for rendering. The rendered code is read using the purchaser's communications device (MT) which encrypts the decoded data and transmits it in a confirmation message to the payment server apparatus (TC). The transaction is authorized conditional on the confirmation message containing the transaction validation token. The authorization may also be conditional on a successful verification of the identity of the communications device.

## Description

The present invention relates to the field of validation of transactions, notably electronic transactions. More particularly, the invention relates to a method and system which validate transactions by making use of the purchaser's communications device, e.g. his mobile telephone, to capture a transaction validation token.

In order to make a purchase of goods or services electronically, i.e. online, it is often necessary for the purchaser to input details of their credit or debit card to the merchant's website or to the website of a payment processor associated with the merchant.

According to the Payment Card Industry security specification, merchants are not supposed to retain credit/debit card numbers. However, survey results suggest that in a large percentage of cases credit card numbers are retained, and this increases the risk that the data may be obtained illicitly by an unauthorized party. Moreover, many users feel uneasy about inputting their credit card or debit card information to a merchant/payment website, even if the website appears to be secure. Thus, it is a disadvantage that conventional online shopping requires the input of credit card or debit card details.

In order to increase security for electronic transactions, many online payment procedures which take payment from a credit/debit card require the purchaser not only to input their card number, expiry date and the like, but also to take some additional step in order to validate the transaction. For example, the purchaser may be asked to input one or more digits of a personal identification number (PIN) or password agreed beforehand between the purchaser and their credit card company/issuing bank. Once again this means that the purchaser is inputting sensitive information online. Moreover this validation step makes the payment procedure less convenient for users because they are required to remember details of the relevant PIN/password. Alternatively, to perform this validation the purchaser may be asked to input a one-time-passcode (OTP) which his payment provider generates and sends to his mobile phone in an SMS (text) message. This alternative validation process is somewhat cumbersome for the user as he is obliged to read a code from his mobile phone screen and input it online. Moreover, there are inherent security weaknesses in an SMS-based method. Furthermore, the purchaser is still obliged to submit his payment card details online as part of the performance of the transaction.

In conventional (non-electronic) shopping, users often use payment cards to pay for their transactions. The security of these transactions is increased by requiring the purchaser to sign his name or to enter a personal identification number (PIN) at the point of sale (PoS) terminal at the time of payment. However, the signature could be forged and the security of the PIN of a payment card can be compromised. However, conventional systems do not implement any additional validation step that could reduce the risk of fraudulent transactions.

The present invention has been made in view of the above-mentioned disadvantages.

Embodiments of the present invention allow a user to validate a payment transaction securely, by making use of a communications device. Certain embodiments of the invention make use of a communications device with a pre-provisioned payment method and, instead of giving payment details to the payee, the payment details are held by the operator of the communications service, who handles payments securely. In general, subscribers to a communications service are already obliged to provide the service operator with payment details in connection with their use of the service. Accordingly, there is substantially no increased security risk in using the operator of the communications service to manage payments, and the need to provide payment details additionally to merchants is removed. Other embodiments of the invention still require the purchaser to input payment card details but, to increase security, implement a validation process that involves use of the purchaser's communications device.

In the present document references to a communications device should be understood as including not only a mobile telephone but also other devices which can communicate data using a telecommunications service, such devices including (but not limited to): SIM-enabled tablet devices, SIM-enabled laptops/PCs, etc.

Certain embodiments of the invention provide a method of validating a transaction between first terminal equipment and payment server apparatus, the transaction-validation method being executed by the payment server apparatus and comprising the steps of:
receiving, from the first terminal equipment, transaction information indicative of a transaction desired to be implemented by a purchaser;
generating a machine-readable code comprising a validation token for the transaction indicated by the received transaction information;
transmitting, to said first terminal equipment, data causing said first terminal equipment to render the machine-readable code; and
receiving encrypted data from a communications device,
decrypting the data received from the communications device,
verifying that the decrypted data comprises the validation token represented, in encoded form, by said machine-readable code, and
generating a signal to authorize said transaction, the generation of the authorization signal being conditional on the verification step determining that the data decrypted in the decrypting step comprises said validation token.

According to this validation method, a transaction will only be authorized if a match is found between a validation token which is sent to the first terminal equipment where the transaction has been set up and the content of encrypted data that is retrieved from a message sent by a communications device. Such a match indicates that the communications device is present at the first terminal equipment where the transaction has been set up. Moreover, by providing the transaction validation token in the form of a machine-readable code the user simply needs to capture the code using his communications device, he is not obliged to manually enter data. This makes the validation method less onerous for the purchaser to use.

The transaction information received in the transaction-information-receiving step may include an identification number corresponding to a subscriber identity module (SIM) of the communications device. In such a case the payment server apparatus can make use of the identification number to identify encryption key data associated with the communications device.

The encrypted data from the communications terminal may be received via a telecommunications network, which may provide greater certainty that the responding device is, indeed, a purchaser's communications device and not some other terminal equipment emulating that device.

This validation method may include the step of processing the received encrypted data to verify the identity of the communications device, and the generation of the authorization signal in the generating step may be made conditional on the processing step verifying that the communications device is associated with the intended purchaser.

The security of the payment method is enhanced if the generation of the transaction authorization signal is conditional not only on successful verification that the received encrypted data contains the transaction validation token but also depends on a successful verification of the identity of the communications device that has sent the received encrypted data. In this way it can be verified that the particular communications device which has managed to capture the machine-readable code rendered at the first terminal equipment is a communications device associated with a proper person (namely, the intended purchaser).

The transaction information received in the transaction-information-receiving step may be received from the first terminal equipment via an Internet protocol network. Thus, the validation method may be used to secure online shopping transactions.

In the above transaction-authorization method the generation of the machine-readable code in the generating step may be made conditional on successfully verifying that the purchaser is authorized to make the payment involved in the transaction. Thus, transactions will only be validated if the purchaser is authorized to pay for the goods/services in question.

In the above-mentioned transaction-authorization method the generating step may comprise generating a QR code (that is, a Quick Response code such as those specified in the ISO/IEC 18004:2006 standard) representative of the validation token in encoded form. Nowadays, many communications devices include digital imaging devices and can be configured (e.g. by installing appropriate application software) to scan and decode QR codes, making this a particularly convenient machine-readable representation to use in the present invention.

In the above-mentioned transaction validation method, the transaction may be payment for an online purchase, the communications device may be the purchaser's mobile telephone and the transaction-information-receiving step may comprise receiving transaction information including information identifying the purchaser's mobile telephone.

When the transaction-validation method according to the above-mentioned embodiments of the invention is used as part of an electronic transaction, a purchaser can use the first terminal equipment to set up the electronic transaction at an online store, select to make payment using a mobile payment service which operates the validation method, notably a service with which the purchaser has pre-registered details of a pre-provisioned payment method, and the transaction can be validated simply by the user using his mobile telephone to scan a machine-readable code (e.g. a QR code) which the mobile payment service causes to be displayed on the webpage of the online store. This is particularly quick and easy for the user, who does not need to remember a password, nor to input details of a payment card to an online store.

Certain embodiments of the invention provide a computer program comprising instructions for performing the above-mentioned method and a recording medium bearing such a computer program.

Certain embodiments of the present invention provide payment server apparatus for validating an electronic transaction, the payment server apparatus comprising:
a receiver module for receiving, from first terminal equipment, transaction information indicative of a transaction desired to be implemented by a purchaser, and for receiving encrypted data from a communications device;
a code generator adapted to generate a machine-readable code comprising a validation token for the transaction indicated by the received transaction information;
a transmitter module for transmitting, to said first terminal equipment, data causing said first terminal equipment to render the machine-readable code generated by the code generator;
a decryption unit for decrypting the encrypted data received from the communications device;
a comparison module for verifying that the data decrypted by the decryption unit comprises the validation token represented, in encoded form, by said machine-readable code, and
an authorization module adapted to generate a signal authorizing said transaction, the generation of the authorization signal being conditional on the comparison module having verified that the data decrypted by the decryption unit comprises said validation token.

The above-mentioned payment server apparatus enables an electronic transaction to be validated when the purchaser's communications device can capture and transmit back to the payment server apparatus a machine-readable code which comprises a validation token and which the payment server has caused to be rendered on first terminal equipment where the electronic transaction has been set up. The transaction is validated with little effort on the part of the user simply by virtue of the user capturing the machine-readable code using the appropriate communications device. In certain embodiments of the invention this allows the transaction to be validated without the need for payment card data to be input to the first terminal. In certain other embodiments of the invention this technique provides additional security when payment card details have been input.

The present invention still further provides a communications device comprising:
a code reader configured to read a machine-readable code rendered by a first terminal and to recover a transaction validation token from the read machine-readable code;
an encryption unit adapted to encrypt the transaction validation token recovered by the code reader; and
a transmitter adapted to transmit the encrypted transaction validation token to payment server apparatus.

This communications device can capture a machine-readable code comprising a transaction validation token rendered by a first terminal and transmit the transaction validation token securely to payment server apparatus so as to validate a transaction by demonstrating that the communications device has been present at the first terminal. In certain embodiments of the invention this allows the transaction to be validated without the need for payment card data to be input to the first terminal. In certain other embodiments of the invention this technique provides additional security when payment card details have been input.

The communications device may comprise a subscriber identity module (SIM) or other integrated secure element and the encryption unit may be integrated in the SIM and adapted to encrypt the validation token using key data stored in this integrated secure element/SIM. When the communications terminal encrypts the transaction validation token data using key data stored in an integrated secure element this provides confidence regarding the identity of the physical device which is sending the encrypted data. Moreover, when the secure element is a SIM integrated in the communications device this facilitates the implementation of the payment application because telecommunications operators already have functionality enabling them to interact with SIM data to identify, and accept data connection from, a communications device having a SIM.

The communications device may comprise a user interface client for managing a user interface and the communications device may be adapted to transmit an encrypted transaction validation token to the payment server apparatus only when a user operates the user interface to perform an unlocking operation.

In the case where the communications device has a user interface client and the user must perform an unlocking operation to enable the transmission of the encrypted validation token, this provides a double layer of security. Two conditions must be satisfied in order to obtain validation of the transaction: firstly, an appropriate communications device must be present at the first terminal to capture the transaction validation token (requiring the prospective purchaser to be in possession of the right communications device) and, secondly, the user must be capable of performing the unlock operation which, at the least, requires the user to possess certain information (if the unlocking operation is performed by performing some gesture(s) or inputting a passcode) and may require the user to be possess particular biometric data (in the case where the unlock operation requires biometric data).

In the case where the user unlocks the transmission of the encrypted transaction validation token by making a gesture (e.g. drawing a shape on a touchscreen of his mobile phone), or by inputting biometric data (e.g. placing his finger on a fingerprint scanner) the use of the validation system is particularly simple for the user. In this case all the user needs to do to validate a transaction is to make a gesture or present a body part for capture of biometric data and to use his communications device to capture a rendered code; there is no need for the user to input codes or passwords either to the first terminal equipment or to the communications device.

Further features and advantages of embodiments of the present invention will become apparent from the following description of said embodiments, which is given by way of illustration and not limitation, illustrated by the accompanying drawings, in which:
Fig.1 is a diagram showing the main participants in an electronic transaction which may be validated using the method and system according to the present invention;
Fig.2 is a schematic diagram showing interactions between the participants shown in Fig,1 during an electronic-transaction which makes use of a validation method according to a first embodiment of the present invention;
Fig.3 is a flow diagram showing the steps in the electronic-transaction according to the example of Fig.2, in which Figs.3A and 3B show the sequence of steps that are performed to implement the electronic transaction;
Fig.4 is a schematic diagram showing interactions between the participants shown in Fig.1 during an electronic-transaction which makes use of a validation method according to a second embodiment of the present invention;
Fig.5 is a functional block diagram illustrating an example of components that may be present in certain of the payment servers of Fig.1;
Fig.6 is a functional block diagram illustrating an example of components that may be present in a communications device suitable for use in Fig.1.

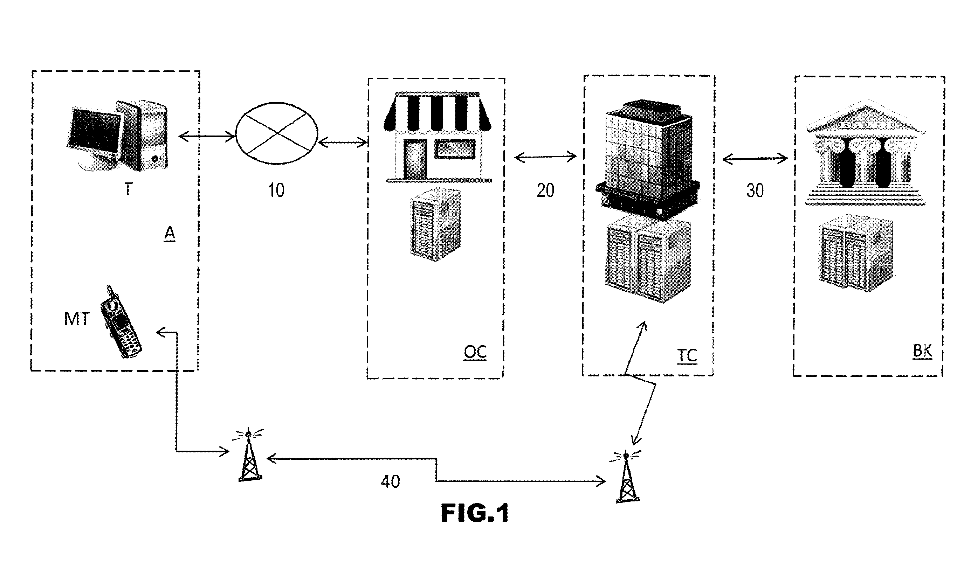

A first embodiment of the invention will now be described with reference to Figs.1 to 3.

The present embodiment is based on the notion of a mobile payment service operated by a telecommunications operator; the mobile payment service makes use of the electronic-transaction validation method and system according to the first embodiment of the invention, It shall be assumed that a telecommunications company ABCTelecom operates this mobile payment service. There are numerous advantages attached to having a telecommunications service provider operate this mobile payment service including the fact that the telecommunications service provider will tend to already possess existing knowledge of the user (his communications device, SIM, address, payment methods and so on) as well as having access to physical security assets (communications device, SIM, communications networks) and existing relationships of trust with users as well as banks.

An owner of a mobile telephone, Andrew, who wishes to use the mobile payment service offered by a telecommunications company ABCTelecom must: possess a technically-compatible mobile telephone, program his mobile phone with appropriate application software (hereafter "an app") and sign up for/activate the mobile payment service.

In the present embodiment of the invention, Andrew's mobile phone is technically-compatible with the mobile payment service because the phone has a secure SIM (for storage of key data mentioned later) and the phone is capable of scanning and decoding QR codes. In certain applications, notably where someone other than a telecommunications operator manages the mobile payment application, instead of using a secure SIM it could be envisaged to use some other secure element integrated into Andrew's phone, for example an SD card, an integrated circuit, etc., protected from unauthorized programmatic access. By making use of a SIM or other secure element integrated into Andrew's phone it is possible to verify that the phone is physically present at the terminal where the transaction is set up (see below). In embodiments where the payment application is managed by a telecommunications operator it is simpler if the secure element is a SIM.

In embodiments of the invention which make use of machine-readable codes different from QR codes, the user's mobile device must be capable of detecting/decoding such other machine-readable codes. To ensure security the phone has a compatible Universal Integrated Circuit Card (UICC), e.g. a SIM, allowing storage of secure information that the telecommunications operator has access to, and a security token should be installed therein at manufacture or pushed over air (e.g. using the Bearer Independent Protocol and CAT-TP protocol, SCP80, etc.).

This technically-compatible phone also has a data connection enabled between the phone and the telecommunications network. Furthermore, in cases where a user-activated unlock function is to be provided the phone should include an input unit adapted for the desired type of user input: for example, the input unit could be a touch screen if the user is to perform unlocking by drawing a pattern, a keyboard if the user is to input a passcode/PIN for unlocking, and so on.

When Andrew decides to sign up for the mobile payment service, he installs in his phone a mobile payment app provided by ABCTelecom. Typically Andrew installs the app by downloading it from an app store or the like, but the invention is not limited to such an approach: the appropriate software could be loaded and installed in Andrew's mobile phone in any convenient manner including loading/installing the software from a recording medium or network, etc. Typically the mobile payment app comprises a user interface client and the app has access to a security cardlet in the SIM (e.g. ISO 7816).

Andrew enrolls in the mobile payment service in a process whereby:
- he provides ABCTelecom with details of at least one payment method for settling the cost of purchases he will make using the mobile payment service (e.g. details of his credit card, debit card, bank account, etc.), so ABCTelecom can submit requests to debit from Andrew's card/account for purchases he authorizes, and
- a private key is generated and stored in the secure SIM in Andrew's mobile phone. The present invention is not particularly limited having regard to the nature of the cryptography algorithm that is employed but, as an example, RSA, DSS and various elliptic curve cryptography techniques may be mentioned.

The present invention is not particularly limited having regard to the method that is used for performing the enrolment process. The enrolment process may be handled using a setup routine included in the mobile payment app, but the invention is not limited to that approach.

During the enrolment process, ABCTelecom registers the details of Andrew's payment method, in association with his mobile phone number and the private key that has been assigned to Andrew. Andrew's key may be a symmetric one in a case where the telecommunications operator can verify (e.g. using SCP80, i.e. Secure Channel Protocol 80) the identity of the communications device from which it is receiving data. Key rotation may be introduced to avoid permanent use of the same keys. It is expected that a mobile phone owner will tend to sign up for mobile payment services offered by their own mobile service provider and, thus, the mobile service provider will already know the user name and address details that correspond to a particular mobile phone number. Thus, the enrolment process may not require Andrew to provide all of these details explicitly. However, if necessary or desired Andrew may be required to communicate all of these details to ABCTelecom again as part of the enrolment process.

A merchant, PQROnlineStore.com, who wishes to be able to take payment via the mobile payment service offered by ABCTelecom, for goods/services he offers, likewise signs up to the mobile payment service but, in this instance, installs appropriate merchant-side software to control the communications and functions described later on.

Andrew's bank (or other payment provider) enrolled in the scheme and identified by Andrew as the source of payments for his purchases will be referred to here as ABCBank. As far as the bank's payment system is concerned, the request and response of transactions should be able to remain the same as those of its existing business clients (although detailed changes may be made, if desired and convenient).

Typically, the following keys will be exchanged during the enrolment processes: between Andrew and ABCTelecom:
Andrew obtains the public key of ABCTelecom: ***KpubTU***
Andrew obtains a private key or symmetric key of his own, ***KpriU***
ABCTelecom obtains the public key or symmetric key of Andrew, ***KpubU*** between ABCTelecom and ABCBank

Option 1):
   ABCTelecom and ABCBank have a dedicated secure channel. A shared symmetric key is used to encrypt the data. ***KTB***
Option2)
   ABCBank has the public key of ABCTelecom to decrypt and identify transaction requests, ***KpubTB**,* and its own private key ***KpriBT**.*
   ABCTelecom has the public key of ABCBank to decrypt and identify transaction responses, ***KpubBT**,* and its own private key ***KprTB**.*
   A trusted Certification Authority is needed to certify ***KpubTB*** and ***KpubBT**.* between PQRonlineStore.com and ABCTelecom

Typically PQROnlineStore.com uses an encrypted connection over Internet (e.g. HTTPS) to make requests to ABCTelecom and waits for the transaction responses. It does not tailor-make more than submitting the request and updating the final result page in terms of website design.

(In the case of in-store purchasing, a physical secure dial-up line can be used to communicate with ABCTelecom like PoS terminals do today.)

Option1) PQROnHneStore.com has a symmetric key, ***KST***, to encrypt the transaction request and decrypt the response.

Fig.1 is a diagram illustrating the parties who participate in an electronic transaction in which payment is made using the mobile payment scheme according to the present embodiment of the invention. As shown in Fig.1, the electronic transaction involves a user Andrew (designated "A" in Fig. 1), who makes use of first terminal equipment ST to select for purchase some goods and/or services offered by a merchant, the first terminal equipment ST connects to the merchant's equipment OC over a network connection 10. Typically, the network connection 10 uses the internet (i.e. Andrew is shopping online). The payment server OC used by the merchant PQROnlineStore.com communicates over a secure connection 20 with a server TC of the telecommunications operator offering the mobile payment service. The connection 20 may take any convenient form including but not limited to a secure connection made using the telecommunication network (fixed and/or mobile) or the internet, secure radio communications, and so on. The server TC of the telecommunications operator communicates over a secure connection 30 with a payment server BK of a bank who has been identified as the source of payment for the electronic transaction. Once again, the connection 30 may take any convenient form. The servers on the telecommunications company and bank domains may be connected using a secure connection (such as VPN using IPSec and/or the SSL/TLS protocols, using a dedicated leased network connection, and so on) in which case it may be sufficient to use symmetric key based encryption when these servers communicate. Otherwise, if a secure connection is not available, certificate based public key cryptography may be used for both encryption and signing. The telecommunications operator TC also communicates with a mobile phone MT of the user Andrew.

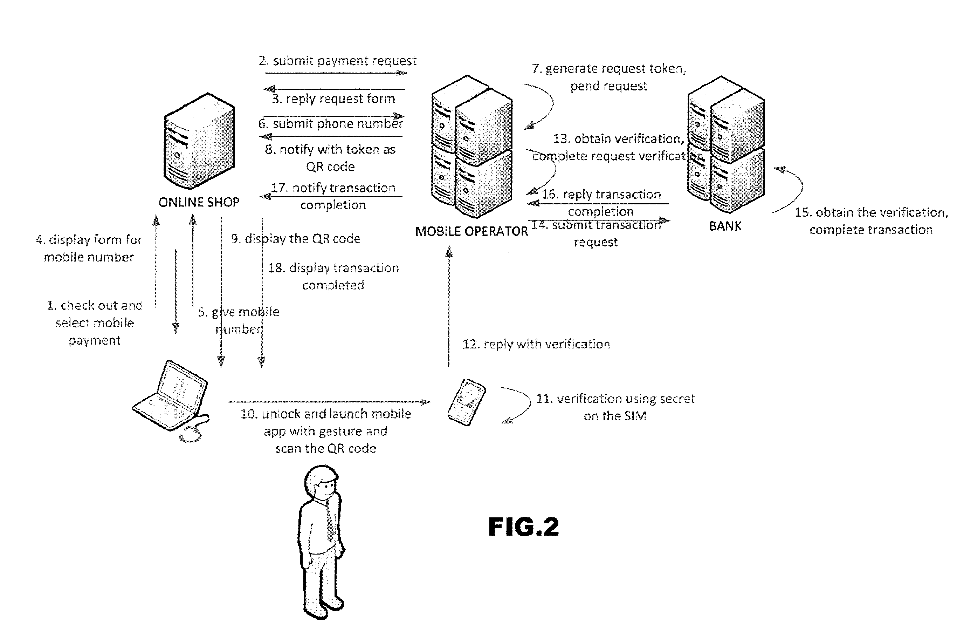

Fig.2 is a schematic diagram illustrating the interactions between the participants shown in Fig.1 when Andrew makes a purchase from merchant PQROnlineStore.com using the mobile payment service offered by ABCTelecom and in accordance with a first embodiment of the invention. In this example it is presumed that Andrew has already enrolled with the mobile payment service, that PQROnlineStore.com has payment server equipment OC configured to take payment using the mobile payment service, that Andrew has identified ABCBank as the source of funds for purchase he will make using the mobile payment service, and that ABCBank has appropriate software installed on its payment server so that it can participate in the mobile payment system.

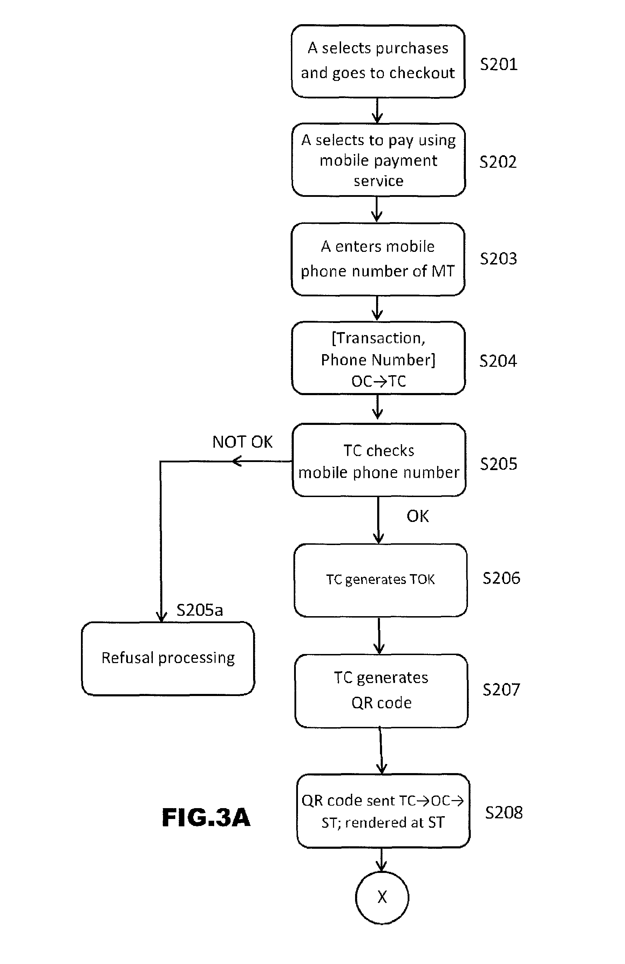

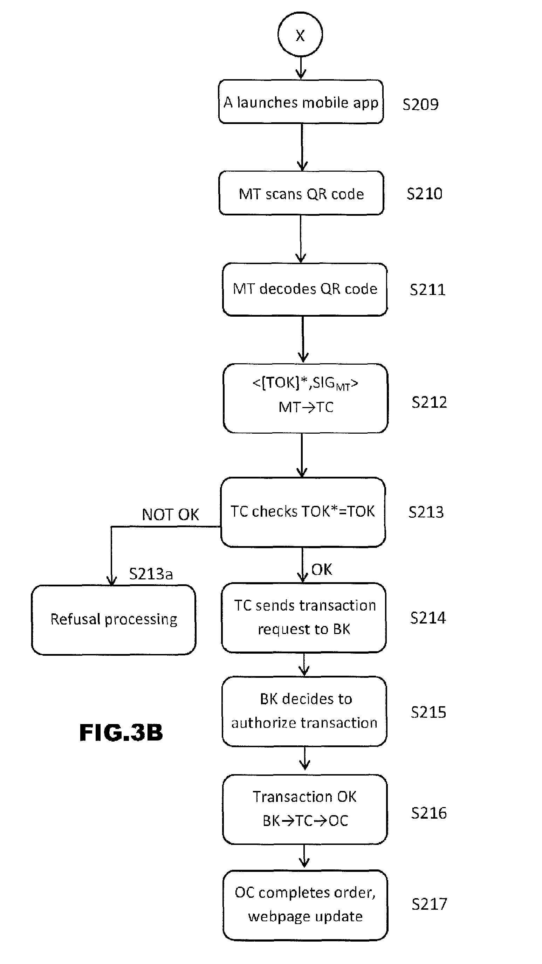

Figs.3A and 3B form a flow diagram illustrating typical steps, according to the first embodiment of the invention, that may be performed when Andrew makes a purchase.

As illustrated in Fig.3A, at a first step S201 in the transaction Andrew uses first terminal equipment ST to access a website on which PQROnlineStore.com offers goods/services for sale. The first terminal equipment will generally be a computer (desktop, laptop, tablet, or other device offering access to online shopping websites) belonging to Andrew. However, the first terminal equipment ST could be a device that PQROnline.com or another trader has installed in a store, Internet café, railway station, etc. Andrew uses the first terminal equipment ST to select goods or services to purchase from PQROnline.com, typically by adding the goods/services to a shopping cart/basket. When Andrew wishes to pay for the goods/services he has chosen, Andrew continues to checkout with a payment server provided in online shop PQROnline.com (or with an associated payment server). The relevant merchant/associated payment server shall be designated OC, as in Fig. 1.

In step S202, during the checkout payment process OC shows a list of supported payment methods, including the mobile payment service. Instead of inputting payment card details to the online store, Andrew selects the "mobile payment" and continues. According to the first embodiment of the invention, the merchant's payment server OC submits a payment request to the telecommunications operator (ABCTelecom) running the mobile payment application and the latter sends back a request form asking for Andrew's mobile phone number. OC forwards the request form for display at the first terminal equipment ST. In step S203 Andrew inputs his mobile phone number, using the request form. Incidentally, if desired, instead of the request form being generated by the operator of the mobile payment application, the merchant could request input of the mobile phone number.

At step S204, OC submits the transaction request together with Andrew's mobile phone number to ABCTelecom's payment server TC over connection 20 securely (i.e. encrypted and signed). If both encryption and digital signature are applied this ensures security even taking into account the scale and diversity of merchant connections. A basic transport level encryption may not be sufficient to render the transaction data sufficiently secure, even if only the telecommunications operator will be the intended sender/recipient of the data. Moreover, when the telecommunications operator is intended not to have access to or view the transaction data (but merely to act as a relay for the data) then the further encryption is necessary, although signing may be degraded to attaching a security token to the request/response data for the telecommunications operator to validate the communication.

The ABCTelecom payment server TC may be configured to check that the mobile phone number included with the transaction details received from OC is a valid telephone number and, if it is not, to refuse to use the mobile payment system to pay for this transaction. Typically, the processing S205a involved in refusing to continue processing the transaction involves returning a "refused" or "invalid" message to the merchant's Payment Server OC. If the mobile telephone number is valid (or if the check on the mobile phone number is omitted) then, in step S206, ABCTelecom's payment server TC generates a validation token (designated by the symbols TOK in Fig.3A). Typically the validation token is a unique sequence e.g. a coded number using a complex security algorithm.

If desired, the validation token could be generated by the payment server of ABCBank instead of that of ABCTelecom. In such a case ABCTelecom's payment server TC would sign the transaction request received from OC and submit it to ABCBank's payment server BK securely without examining the transaction detail. ABCBank's payment server BK would decrypt the transaction request and process the transaction details to check whether or not Andrew is authorized to make the payment involved in the transaction, for example checking that his credit balance has not been exceeded. If the payment is authorized then ABCBank's Payment Server BK would mark the transaction as pending, and reply securely to ABCTelecom's Payment Server TC with the validation token for the transaction.

However, if the validation token is generated by ABCTelecom, as indicated in Figs.2 and 3A, then fewer adaptations need to be made in the bank payment server, as shall become apparent from the description below.

At step S207 ABCTelecom's payment server TC generates a QR code representation of the validation token. The QR code is transmitted to the merchant's payment server OC, which transmits it to the first terminal equipment ST for display on the ABCOnlineStore.com payment screen that is displayed to Andrew by that first terminal equipment ST (step S208). ABCTelecom's Payment Server TC waits for confirmation of the transaction from Andrew.

If desired, ABCTelecom's payment server may modify the initial validation token before generating the QR code (or other machine-readable representation). For example ABCTelecom's payment server may generate the final validation token by adding extra information to an initially-generated unique sequence, for example by adding a timestamp, an expiration time/date, a onetime challenge sequence, and so on.

Continuing on Fig.3B, it will be seen that, in a next step S209, Andrew launches the Mobile Payment Application on his mobile phone MT. The security of the system is enhanced if Andrew needs to perform an unlocking operation in order to enable the Mobile Payment Application to be launched on his mobile phone MT. For example, in order to unlock the Mobile Payment Application Andrew may need to input a drawing pattern on a screen of his mobile phone, and this drawing pattern may be checked in real-time by the ABCTelecom Payment Server TC. However, the invention is not limited to this procedure for unlocking the Mobile Payment Application; any convenient approach may be used.

Optionally, the Mobile Payment Application may provide Andrew with a choice between various payment methods that he has set up ahead of time, for example a choice between different payment cards (in which case, data identifying the chosen payment card is forwarded to ABCTelecom with the other data mentioned below and ABCTelecom sends a transaction payment request to the payment server BK of the appropriate financial institution). Within the mobile payment application, Andrew operates his mobile phone to capture the QR code that is being displayed on the screen of the first terminal equipment ST (step S210). The Mobile Payment Application decodes the QR Code at step S211, uses the private key pre-installed on Andrew's SIM card when he activated his mobile payment service with ABCTelecom provided by ABCBank to sign the transaction message, and sends it to the ABCTelecom payment server TC securely (step S212). This transmission to the ABCTelecom payment server TC may be made using different channels. The least secure choice would be to use the phone's Wifi connection to connect to the internet via a wireless access point (using HTTPs and encryption). More secure options transmit the data using the telecommunications operator's data network, such as: option 1 transmitting over a dedicated binary data channel such as using USSD or BIP CAT-TP, or option 2 transmitting over the Internet (e.g. using HTTPs) over a data connection (e.g. a 3G network).

The fact that Andrew's mobile phone has scanned the QR code sent to first terminal equipment ST counts as a confirmation that Andrew - or, at least, a person in possession of Andrew's mobile telephone - is indeed the person who is performing the electronic transaction via the first terminal equipment ST. The degree of confidence in the correct identity of the transmitting phone is enhanced when encryption is performed using secure key data from the SIM.

The ABCTelecom payment server TC receives the confirmation message from Andrew from his mobile phone, decrypts it using Andrew's public key and checks, in step S213 whether or not the confirmation message contains a match to the validation token TOK that was generated in step S206. If a match is found this means that the confirmation message was indeed sent by Andrew's mobile phone, in other words, that a person with Andrew's mobile phone is present (so as to be able to scan the displayed QR code) at the first terminal equipment ST where the electronic transaction is being set up. If desired. TC may perform additional checks before accepting the received validation token: for example, checking that an expiration date included in the validation token has not been exceeded, checking the date stamp of the validation token, and so on.

As mentioned above, the security of the system is enhanced if Andrew needs to perform an unlocking operation in order to enable the Mobile Payment Application to be launched on his mobile phone MT. In such a case, the fact that a match is found in step S213 means not only that a person having Andrew's mobile phone is present at the first terminal equipment ST where the electronic transaction is being set up but also that this person knew how to unlock the Mobile Payment Application on Andrew's phone, increasing the likelihood that this person is, in fact, Andrew, not just a person in possession of Andrew's phone.

The mobile payment app will typically include user interface client software configured to allow the user to unlock the mobile payment app by performing a simple unlocking function. Use of the system is simplified for the user if the unlocking function merely requires him to perform a gesture, e.g. drawing a pattern (using a finger, stylus, etc.) on a touch screen of the phone. Moreover, if users are happy to have their biometric data held by the telecommunications company then the unlocking function could include measurement of some of biometric data (e.g. fingerprint, iris pattern, etc.). Other unlocking functions could be implemented if desired, e.g. unlocking by input of a passcode or PIN.

When the received validation token has been accepted in step S213, ABCTelecom's payment server TC sends an encrypted and signed payment request to ABCBank's payment server, including information identifying Andrew as the prospective payer and details of the transaction. This payment request can be formatted for compliance with existing systems, or formatted in a new manner, as convenient. ABCBank's payment server BK decides, in step S215, whether or not to authorize settlement of the payment for the electronic transaction so that a payment will be made from Andrew's account to that of PQROnlineStore.com. ABCBank's decision will typically involve making checks, for example checking that Andrew's credit balance has not been exceeded. ABCBank's payment server BK notifies ABCTelecom's payment server TC that the transaction has been authorized, and ABCTelecom's payment server TC notifies PQROnlineStore.com's payment server OC that the transaction has been validated/authorized (step S216). Accordingly the merchant completes the order and updates the webpage being viewed at the first terminal equipment ST (step S217).

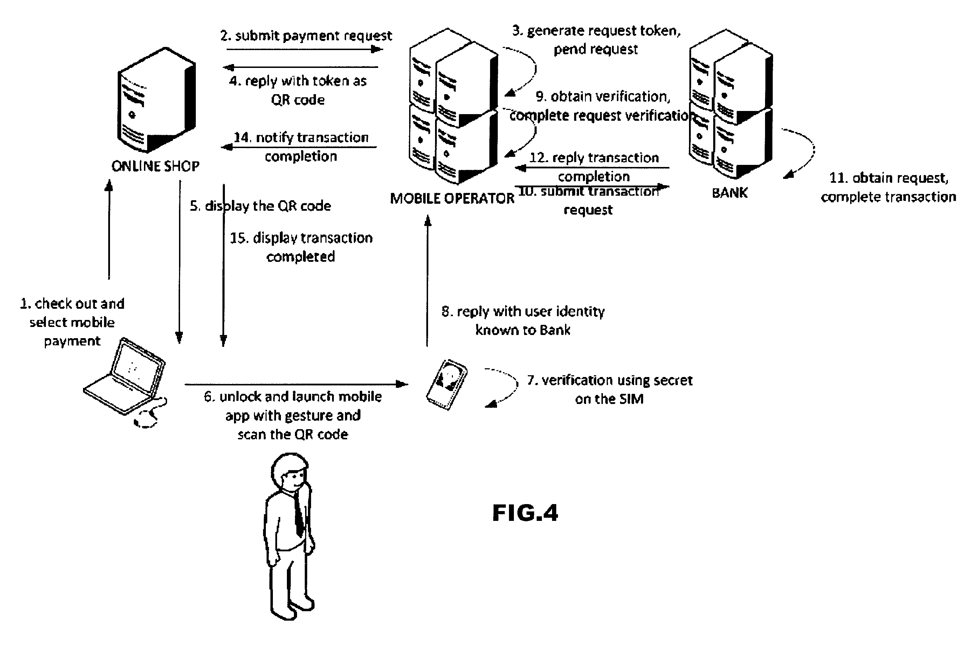

A second embodiment of the invention is illustrated in Fig. 4, which shows the interactions between the participants. The second embodiment is a variant of the first embodiment of the invention in which the user does not need to input his/her mobile phone number. Many details of the second embodiment are the same as in the first embodiment so only the differences will be described here.

According to the second embodiment of the invention ABCBank distributes a public certificate for Andrew onto the SIM as part of the enrolment process in the system. This certificate allows ABCBank to map Andrew to his account with the Bank. So, Andrew does not need to give his mobile number at checkout, instead the mobile payment app will reply with this certificate to ABCTelecom who simply combines it with the original request from PQROnlineStore.com regarding the payment and sends them to the ABCBank. In this case also ABCTelecom generates the transaction ID and corresponding QR code and waits for Andrew's confirmation.

The second embodiment of the invention possesses the advantage that ABCTelecom only needs to know Andrew's number (which can be derived from the connection with the SIM of Andrew's phone when it communicates with ABCTelecom after scanning the QR code) and the corresponding Bank but not any account details, so the involvement of ABCTelecom in the transaction per se is minimized.

In the transaction-validation methods that are implemented in the electronic transactions described above with reference to Figs.2 to 4, the telecommunications operator apparatus TC generates a QR code which comprises an encoded version of the validation token TOK. However, the present invention is not limited to the use of QR codes to represent the encoded validation token, any convenient machine-readable representation may be used including, but not limited to visual representations (bar codes, other two or three-dimensional images, etc.), audio sequences/sounds (which may be rendered repeatedly, so that there is time for the user to get out the device that will capture the sound), and so on.

In the first and second embodiments described above, the user selects to pay via the mobile payment application instead of entering payment card details. However, in certain variants of the first and second embodiments of the invention the user does input payment card details and the mobile payment application is invoked to provide an additional validation step helping to increase the security of the payment method. Moreover, these variants can be applied not only in the context of an online transaction performed using first terminal equipment communicating with an online merchant website, but also in the context of a point of sale in a bricks and mortar establishment.

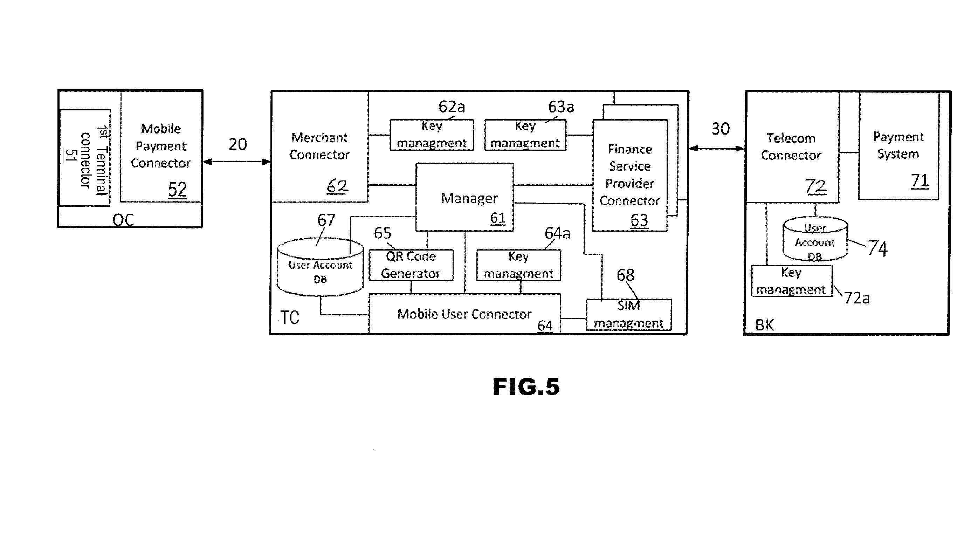

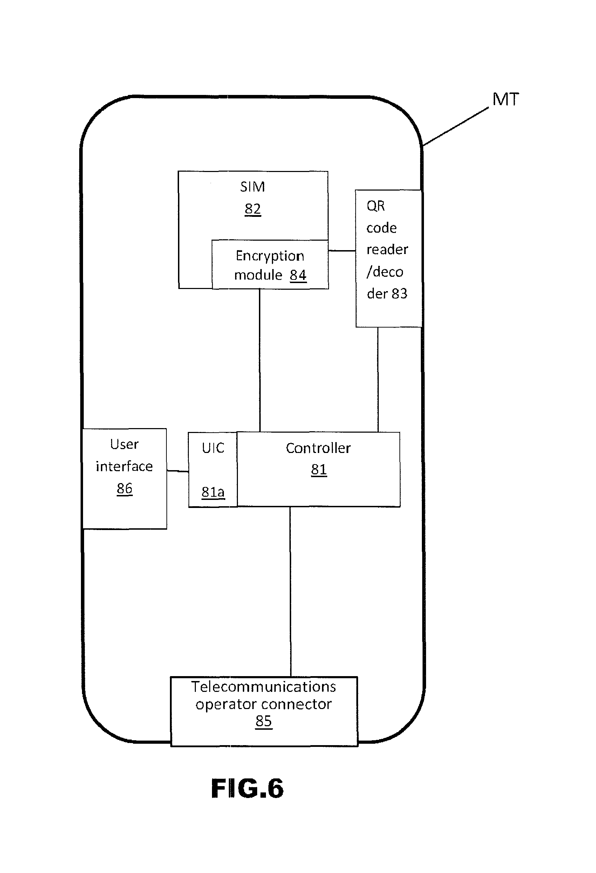

Fig.5 is a functional block diagram illustrating functional modules that may be present in payment server apparatus comprising the mobile operator's payment server TC and the bank payment server BK of Fig.1, and Fig.6 is a functional block diagram illustrating components that may be present in the user's communications device MT. It is to be understood that the functions of the modules illustrated in Figs.5 and 6 may well, in practice, be implemented primarily in software. The distribution of functions between modules shown in each of Figs.5 and 6 is purely illustrative and not limitative.

As illustrated in Fig.5, the merchant's payment server OC includes respective connectors 51 and 52 for handling communications with the first terminal where a transaction is being set up and with the payment server TC of the telecommunications operator operating the mobile payment service. Typically the merchant's payment server may include components additional to those illustrated in Fig.5.

The payment server TC of the telecommunications operator includes a payment manager 61 (typically embodied using a processor) handling communications with the merchant's payment server OC, with the bank's payment server BK and with the user's communication device MT via respective connectors 62, 63 and 64. Each of the connectors 62-64 has a respective key management module 62a, 63a and 64a for handling encryption/decryption of the associated communications. The payment manager 61 also controls the operation of a QR code generator 65, a user account database and a SIM management module 68. The payment server TC of the telecommunications operator may include components additional to those illustrated in Fig.5.

The payment server of the bank has a payment system module 71 (typically implemented using a processor) which controls communications with the payment server TC of the telecommunications operator via a connector 72, as well as controlling access to a user account database 74. The connector 72 has an associated key management module 72a for handling encryption/decryption of the associated communications. The payment server of the bank may include components additional to those illustrated in Fig.5. notably for performing additional functions (e.g. achieving settlement of the cost of the transaction to the merchant's bank account).

As illustrated in Fig.6, the user's communications device MT includes a control module 81 (typically implemented using a processor) loaded with the mobile payment app and incorporating a user interface client 81a. The communications device OC also includes a secure SIM 82, an encryption module 84 included in the SIM, a connector 85 handling communications with the telecommunications operator and a physical user interface 86 (e.g. a keypad, touchscreen, and so on). The control module 81 controls operation of the latter components. The communications device may include components additional to those illustrated in Fig.6, notably for performing additional functions that are not necessarily relevant to the present invention (e.g. media player components, wifi communications components, etc.).

Although the invention has been described with reference to certain specific embodiments it is to be understood that various modifications and improvements can be made without departing from the scope of the invention as defined in the appended claims.

## Claims

1. A method of validating a transaction between first terminal equipment and payment server apparatus (TC), the transaction-validation method being executed by the payment server apparatus and comprising the steps of:
receiving, from the first terminal equipment (ST), transaction information indicative of a transaction desired to be implemented by a purchaser;
generating a machine-readable code comprising a validation token (TOK) for the transaction indicated by the received transaction information;
transmitting, to said first terminal equipment (ST), data causing said first terminal equipment (ST) to render the machine-readable code; and
receiving encrypted data from a communications device (MT),
decrypting the data received from the communications device (MT),
verifying that the decrypted data comprises the validation token (TOK) represented, in encoded form, by said machine-readable code, and
generating a signal to authorize said transaction, the generation of the authorization signal being conditional on the verification step determining that the data decrypted in the decrypting step comprises said validation token (TOK).

2. The transaction-authorization method according to claim 1, wherein the transaction-information-receiving step comprises receiving transaction information including an identification number corresponding to a subscriber identity module of the communications device.

3. The transaction-authorization method according to claim 2, wherein the encrypted-data-receiving step comprises receiving said encrypted data via a telecommunications network.

4. The transaction-authorization method according to claim 1, 2 or 3, and comprising the step of processing the received encrypted data to verify the identity of said communications device (MT), wherein the generation of the authorization signal in the generating step is conditional on the processing step verifying that said communications device (MT) is associated with said purchaser.

5. The transaction-authorization method according to claim 1, wherein the transaction-information-receiving step comprises receiving said transaction information from the first terminal equipment (ST) via an Internet protocol network.

6. The transaction-authorization method according to claim 1, and comprising the step of verifying the authorization of the purchaser to make a payment necessary for performance of said transaction, the generation of the machine-readable code in the generating step being contingent on successful verification, in the authorization-verification step, that the purchaser is authorized to make said payment.

7. The transaction-authorization method according to claim 1, wherein the generating step comprises generating a QR code representative of the validation token (TOK) in encoded form.

8. The transaction-authorization method according to claim 7, wherein the transaction is payment for an online purchase, the communications device is the purchaser's mobile telephone and the transaction-information-receiving step comprises receiving transaction information including information identifying the purchaser's mobile telephone.

9. A computer program comprising instructions for performing the method according to any one of claims 1-8 when said program is executed by a processor.

10. A recording medium bearing a computer program according to claim 8.

11. Payment server apparatus (TC) for validating a transaction, the payment server apparatus comprising:
a receiver module (62,64) for receiving, from first terminal equipment (ST), transaction information indicative of a transaction desired to be implemented by a purchaser, and for receiving encrypted data from a communications device (MT);
a code generator (65) adapted to generate a machine-readable code comprising a validation token (TOK) for the transaction indicated by the received transaction information;
a transmitter module (62) for transmitting, to said first terminal equipment (ST), data causing said first terminal equipment (ST) to render the machine-readable code generated by the code generator:
a decryption unit (64a,68) for decrypting the encrypted data received from the communications device (MT);
a comparison module (61) for verifying that the data decrypted by the decryption unit comprises the validation token (TOK) represented, in encoded form, by said machine-readable code, and
an authorization module (61) adapted to generate a signal authorizing said transaction, the generation of the authorization signal being conditional on the comparison module having verified that the data decrypted by the decryption unit comprises said validation token (TOK).

12. A communications device (MT), comprising:
a code reader (83) configured to read a machine-readable code rendered by a first terminal (ST) and to recover a transaction validation token from the read machine-readable code;
an encryption unit (84) adapted to encrypt the transaction validation token recovered by the code reader (83); and
a transmitter (85) adapted to transmit the encrypted transaction validation token to payment server apparatus (TC,BK).

13. A communications device (MT) according to claim 12, and comprising a subscriber identity module (82), wherein the encryption unit (84) forms part of the SIM (82) and is adapted to encrypt the validation token using key data stored in the SIM (82).

14. A communications device (MT) according to claim 13, and comprising a user interface client (81a) for managing a user interface (86), wherein the communications device is adapted to transmit an encrypted transaction validation token to the payment server apparatus (TC) only when a user operates said user interface (86) to perform an unlocking operation.

15. A communications device (MT) according to claim 14, wherein the communications device is adapted to transmit an encrypted transaction validation token to the payment server apparatus (TC) only when a user inputs gesture, biometric or personal identification number information via said user interface (86).
